# EUROPEAN PATENT APPLICATION

(11) **EP 3 205 478 A1**
(43) Date of publication of application: **16.08.2017**
(21) Application number: 16155095.9
(22) Date of filing: 10.02.2016
(51) Int. Cl.: B29C 65/08, B06B 3/00, B65B 51/22

(54) **ULTRASOUND WELDING DEVICE, IN PARTICULAR FOR WELDING FLEXIBLE PACKAGES, OPTIONALLY MADE OF A PLASTIC MATERIAL AND MACHINE FOR PACKAGING FOOD PRODUCTS PROVIDED WITH SUCH AN ULTRASOUND WELDING DEVICE**

(71) Applicant: Ilapak Italia S.p.A., 52045 Foiano Della Chiana (AR) (IT)
(72) Inventor: PERUGINI, Gianni, 52043 CASTIGLION FIORENTINO (AR) (IT); FARETRA, Marco, 47020 LONGIANO (FC) (IT); BARBANTI, Giovanni, 40033 CASALECCHIO DI RENO (BO) (IT); MANERA, Sergio, 40134 BOLOGNA (BO) (IT)
(74) Representative: Bonatto, Marco

(57) **Abstract**

The present invention concerns an ultrasound welding device (10), in particular for welding flexible packages (Y) optionally made of a plastic material. The device (10) comprises: a power generator arranged to generate at least one sinusoidal electric signal at a predetermined frequency; a transducer (11) operatively associated with the power generator in order to transform the electric signal generated by the latter into mechanical vibrations having the same frequency as the electric signal; at least one sonotrode (12) associated with the transducer (11) and structured so as to amplify and transmit the mechanical vibrations generated by the transducer (11) to a welding surface (13) defined on the same; a contrast element (16) provided with at least one contrast surface (16a) arranged to engage the welding surface (13) of the sonotrode (12) during the welding operations. The transducer (11) and the sonotrode (12) are engaged so as to amplify and transmit the vibrations generated by the transducer (11) to the welding surface (13) of the sonotrode (12) in the absence of interposition of an amplifier or a similar device for the amplification of vibrations.

## Description

The present invention refers to an ultrasound welding device, in particular for welding flexible packages optionally made of a plastic material.

Another object of the present invention is a machine for packaging food products provided with such an ultrasound welding device.

The object of the present invention is used in the industrial field of ultrasound welding devices and, in particular, is suitable for being used on machines and apparatuses for packaging food products and/or similar products.

As known in the industrial field of packaging of food products, it is very common to use flexible packages made through thin films of thermoplastic polymers. Such packages can be of different shapes and sizes according to the type of food product to be packaged and/or the contingent requirements of the manufacturers.

Generally, the aforementioned packages are formed and closed immediately after the filling in step by suitable automated machines.

The prior art provides that such machines carry out the hermetic closure of the filled in packages through suitable thermowelding stations or devices.

In particular, the thermowelding stations and devices are provided with suitable metal bars that are heated at a sufficient temperature to melt the material which the packages consist of. Once in contact with the portions of thermoplastic material to be joined, the heated metal bars transfer part of own heat to the package being welded, causing a partial melt and, therefore, the welding thereof.

With reference to the packaging of food products, the aforementioned thermowelding of packages has various problems.

A first problem that can be encountered concerns the quality of the airtight seal of the weld made on the package. Indeed, it is not rare for a part of the food product to be packaged to be at the welding area, compromising the fusion of the parts of the packaging in contact at one or more points. In this case, the welding obtained has unwelded areas or openings in fluid communication with the outside so that the package is not able to ensure adequate protection of the product from foreign polluting agents and inevitably allows the product to fall out through such openings.

In the case in which the food products to be packaged contain fats or oils, like for example cheeses, cold meats, soups, sauces and/or similar, the welding surfaces of the metal bars incur undesired contaminations that make the welding difficult with repercussions also on the quality of the hermetic seal of the welding itself.

When the food products to be packaged are fresh, like for example salads, vegetables, cheeses and similar, and/or sensitive to high temperatures, like for example chocolate and other analogous products, the high heat of the metal bars can alter and compromise the chemical and organoleptic characteristics of such products that are thus subject to changes in flavour, aroma, as well as appearance.

In the case in which the products to be packaged have a powdered or granular structure, like for example flour, sugar, powdered yeast, coffee, cereals, animal food and similar, it may happen that the powders or granules become trapped in the welds with undesired repercussions on the quality thereof and also on the outer appearance of the package obtained.

In order to solve the aforementioned problems it is common practice to replace the thermowelding stations and devices with ultrasound welding stations and devices.

In practice, an ultrasound frequency mechanical vibration is applied to the portions of thermoplastic material to be welded, said vibration generating, by molecular friction, localised heat, consequently melting the material only in contact with the welding bars.

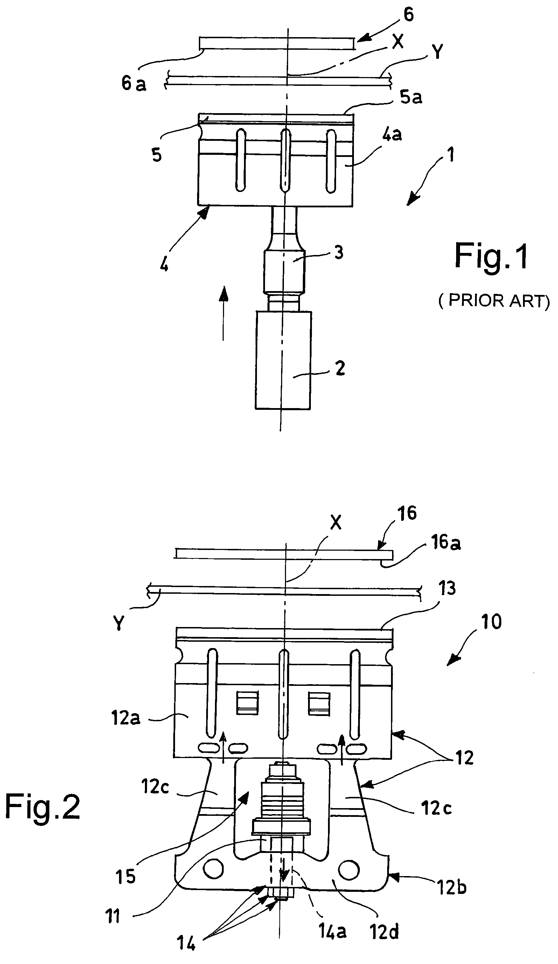

An example of an ultrasound welding device of the known type that is normally used in industrial machines and apparatuses for packaging food products is illustrated in the attached figure 1.

The ultrasound welding device 1 represented in figure 1 is provided with a power generator (not illustrated) arranged to generate at least one electric signal at a predetermined frequency. The power generator is operatively associated with a transducer 2, internally provided with one or more piezoelectric elements that have the task of transforming the electric signal generated by the power generator into mechanical vibrations.

The transducer 2 normally has an elongated shape that develops mainly along a longitudinal direction X.

In order to amplify the vibrations generated by the transducer 2, the ultrasound welding device 1 of the traditional type is also equipped with two mechanical components connected in series to the transducer 2, namely along the longitudinal direction X of development of the latter.

The first mechanical component consists of an amplifier 3 of substantially elongated, cylindrical or frusto-conical configuration. The second mechanical component consists of a sonotrode 4 that has a support portion 4a defining, on the opposite side with respect to the transducer 2 and to the amplifier 3, said welding bar 5 on which a respective welding surface 5a is made.

The ultrasound welding device of the conventional type is also provided with at least one contrast bar 6 on which a respective contrast surface 6a is defined against which the welding surface 5a of the sonotrode 5 operates during the ultrasound welding in order to weld the portions in contact of the package being formed.

Although the use of welding devices like the one described above and represented in figure 1 in machines and apparatuses for packaging food products allows the problems linked to thermowelding to be overcome effectively, the Applicant has found that such devices, however, are not free from some drawbacks and can be improved in various ways, mainly in relation to their excessive longitudinal bulk due to the arrangement in series of the transducer 2, of the amplifier 3 and of the sonotrode 4.

In particular, the Applicant has found that the bulk of conventional ultrasound welding devices like the one illustrated in figure 1 is strictly linked to the wavelength of the waves that propagate inside the medium.

Conventional welding devices are in fact designed and made so as to amplify the vibrations generated through a mechanical configuration that has a longitudinal dimension equal to 31/2, where 1 corresponds to the wavelength that propagates in the medium.

The excessive bulk of the traditional configuration of the aforementioned ultrasound welding devices inevitably has an impact on the overall configurations and dimensions of the machines and apparatuses for packaging food products that house them.

In order to maximise the vibrations generated by the transducer, the Applicant found that the longitudinal bulk of the ultrasound welding device must be equal to a multiple of 1/2, where 1 corresponds to the wavelength that propagates in the medium.

The main aim of the present invention is to propose an ultrasound welding device and a machine for packaging food products provided with such an ultrasound welding device, capable of solving the problems encountered in the prior art.

An aim of the present invention is to amplify and transmit the longitudinal vibrations generated by the transducer effectively through a device having a reduced longitudinal bulk, in other words reduced with respect to the longitudinal bulk of traditional ultrasound welding devices.

A further aim of the present invention is to make machines and apparatuses for packaging food products that are of reduced dimensions and limited bulks, less than those of similar packaging machines and apparatuses.

The aforementioned aims and others are substantially accomplished by an ultrasound welding device and by a machine for packaging food products provided with such an ultrasound welding device, as expressed and described in the following claims.

A preferred but not exclusive embodiment of an ultrasound welding device and of a machine for packaging food products provided with such an ultrasound welding device in accordance with the present invention will now be described as an example. The description will be made hereinafter with reference to the attached drawings, provided for exclusively indicating and therefore not limiting purposes, in which:
figure 1 is a schematic representation of an ultrasound welding device according to the prior art;
figure 2 is a schematic representation of an ultrasound welding device, in accordance with the present invention;
figure 3 is a schematic representation of a machine for packaging food products provided with the ultrasound welding device according to figure 2.

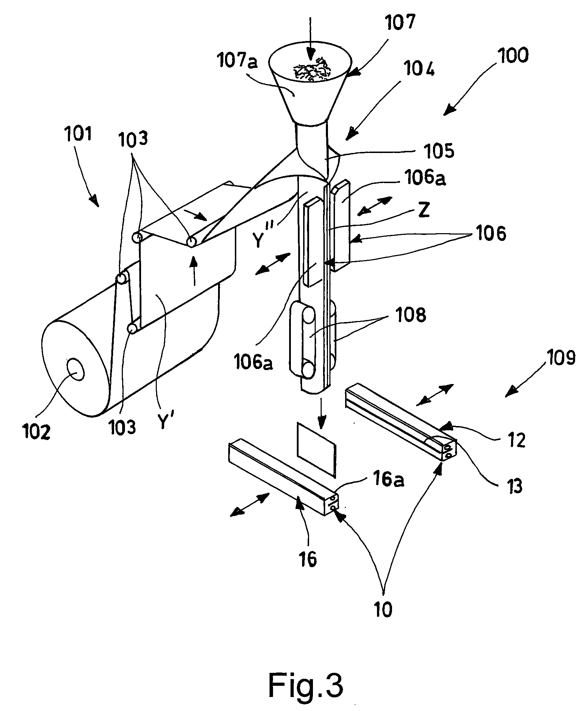

With reference to figures 2 and 3, reference numeral 10 wholly indicates an ultrasound welding device, in particular for welding flexible packages Y, optionally made of a plastic material, in accordance with the present invention.

The ultrasound welding device 10 comprises at least one power generator (not illustrated in the attached figures) arranged to generate at least one electric signal, in particular sinusoidal at a predetermined frequency, preferably comprised between 20kHz and 35kHz.

Advantageously the power generator is arranged to generate a sinusoidal electric signal having a programmable amplitude, a minimum power of about 1kW and a maximum power of about 5kW.

The ultrasound welding device 10 comprises at least one transducer 11 operatively associated with the power generator in order to transform the electric signal generated by the latter into mechanical vibrations, in particular having the same frequency as the electric signal generated by the power generator.

As visible in figure 2, the transducer 11 has a substantially cylindrical conformation, elongated along its longitudinal development X, and comprises one or more piezoelectric elements (not illustrated) intended to generate the mechanical vibrations.

Still with reference to figure 2, the ultrasound welding device 10 is provided with at least one sonotrode 12 associated with the transducer 11.

The sonotrode 12 is structured and configured so as to amplify and transmit the mechanical vibrations generated by the transducer 11 to a welding surface 13 defined on the sonotrode 12 itself.

Advantageously, the transducer 11 and the sonotrode 12 are engaged so as to amplify and transmit the mechanical vibrations generated by the transducer 11 to the welding surface 13 of the sonotrode 12 in the absence of interposition of an amplifier or a similar intermediate device for the amplification of vibrations.

In particular, the transducer 11 and the sonotrode 12 are directly engaged to one another, preferably through at least one threaded coupling 14.

Alternatively, the sonotrode 12 can also be integrated to the transducer 11 so as to form a unique vibrating entity.

Advantageously, the sonotrode 12 comprises a first portion 12a defining the aforementioned welding surface 13 and a second portion 12b that extends from the first portion 12a, on the opposite side with respect to the welding surface 13.

As visible in figure 2, the second portion 12b of the sonotrode 12 extends canti-levered from the first portion 12a away from the welding surface 13 and has a threaded seat 14a for the direct screwing of the transducer 11.

According to a preferred aspect of the present invention, the second portion 12b of the sonotrode 12 comprises at least one pair of amplification arms 12c that extend substantially parallel to one another from the first portion 12a in the opposite direction with respect to the welding surface 13. The second portion 12b of the sonotrode 12 also comprises at least one support cross member 12d that develops transversely to the amplification arms 12c, preferably perpendicular to the development of the latter.

As visible in figure 2, the support cross member 12d is interposed between the amplification arms 12c and is provided with the aforementioned threaded seat 14a for screwing the transducer 11 to the sonotrode 12.

In even greater detail, the amplification arms 12c and the support cross member 12d of the second portion 12b of the sonotrode 12 define a substantially U-shaped structure that delimits, with the first portion 12a of the sonotrode 12, a housing area 15 for the stay of the transducer 11 screwed or integrated in the threaded seat 14a of the support cross member 12d.

As visible in figure 2, the threaded seat 14a of the threaded coupling 14 is located on the support cross member 12d of the second portion 12b of the sonotrode 12 in a middle point of the latter and of the support cross member 12d.

Advantageously, the mutual engagement between the transducer 11 and the sonotrode 12 through the threaded coupling 14 is such as to allow the transfer of the mechanical vibrations generated by the transducer 11 along the longitudinal development X of the latter, towards the support cross member 12d of the second portion 12b of the sonotrode 12 and on the opposite side with respect to the welding surface 13 thereof.

The particular configuration of the support cross member 12d and of the amplification arms 12c allows the amplified transfer of the vibrations generated by the transducer 11 towards the first portion 12a of the sonotrode 12 and, consequently, of the welding surface 13 of the latter.

In other words, the mechanical vibrations generated by the transducer 11 propagate longitudinally in the opposite direction with respect to the welding surface 13 of the sonotrode 12 in order to be reflected and directed towards the welding surface itself by the particular structure of the sonotrode 12, which consists of the support cross member 12d and of the amplification arms 12c. The structure 12c, 12d of the sonotrode 12 provides for transmitting and amplifying the movements, generating, on the structure itself, a flexional motion that is firstly amplified, so as to then be converted into an axial motion capable of producing homogeneous movements of the welding surface 13.

As represented in figure 2, the ultrasound welding device 10 also comprises at least one contrast element 16 provided with at least one contrast surface 16a arranged to engage the welding surface 13 of the sonotrode 12 during at least one welding operation in which at least two elements to be welded, preferably two portions of a flexible package Y, are interposed between the welding surface 13 of the sonotrode 12 and the contrast surface 16a of the contrast element 16.

Another object of the present invention is also a machine 100 for packaging food products and/or similar products provided with the ultrasound welding device 10 described above.

As visible in figure 3, the machine 100 comprises at least one supply station 101 for supplying a flexible packaging material in the form of continuous band Y', optionally for supplying a flexible plastic material in the form of continuous band.

In detail, the supply station 101 comprises at least one supply reel 102 from which the packaging material in the form of a continuous band Y' is unwound and a plurality of idlers 103 that define the path of the packaging material Y' towards the following station of the machine 100.

Operatively downstream of the supply station 101 of the machine 100, at least one transformation station 104 for transforming the flexible packaging material in the form of a continuous band Y' into a flexible packaging material in the tubular form y" is provided.

In detail, the transformation station 104 comprises a tubular element 105 on which the flexible packaging material in the form of a continuous band Y' takes up a tubular configuration Y". In other words, the flexible packaging material in the form of a continuous band Y', while advancing, wraps the tubular element 105, reproducing its tubular shape Y".

As illustrated in figure 3, the machine 100 is also provided with at least one longitudinal sealing station 106 for sealing the packaging material transformed in the tubular form Y" from the continuous band Y' form. Preferably, the longitudinal sealing station 106 is arranged substantially at the transformation station 104 and is advantageously provided with a pair of contrast welding bars 106a arranged to weld opposite edges Z of the flexible packaging material exiting from the transformation station 104 in order to definitively fix the tubular configuration of the flexible packaging material along the tubular element 105.

Still with reference to figure 3, the machine 100 comprises at least one loading station 107 for loading a predetermined amount of at least one food product to be packaged inside the flexible packaging material in the tubular form Y".

Advantageously, the loading station 107 is operatively arranged at least at the transformation station 104, and in particular also at the longitudinal sealing station 106.

In detail, the loading station comprises at least one loading hopper 107a in fluid communication with the tubular element 105 so that the insertion of a predetermined amount of food product into the loading hopper 107a causes the fall of the product itself by gravity along the tubular element 105 and, consequently, along the flexible packaging material in the tubular form Y".

Downstream of the longitudinal sealing station 106, the machine is advantageously equipped with at least one pair of conveyor belts 108 that facilitate the advancement of the flexible packaging material in the tubular form Y" towards an ultrasound welding station 109 that, in fact, is operatively arranged downstream of the longitudinal sealing station 106 in order to make at least one weld on the flexible packaging material in the tubular form Y", the weld being transversal to the longitudinal development of the flexible packaging material.

Specifically, in the ultrasound welding station 109, the flexible packaging material in the tubular form Y" is welded transversally while it advances so as to form single packages inside which the food product coming from the loading hopper 107a of the loading station 107 is hermetically sealed.

As schematically represented in figure 3, the ultrasound welding station 109 is provided with the ultrasound welding device 10 described above that operates through the welding surface 13 of the sonotrode 12 and the contrast surface 16a of the contrast element 16.

During each welding operation, the flexible packaging material in the tubular form Y" is pressed between the welding surface 13 of the sonotrode 12 and the contrast surface 16a of the contrast element 16 and the ultrasound device 10 is initiated to weld the portions of material in contact.

The object of the present invention solves the problems encountered in the prior art and allows achieving important advantages.

Firstly, the particular configuration of the sonotrode along with the type of direct connection between the latter and the transducer allows an optimal amplification of the mechanical vibrations generated by the transducer in the absence of bulky intermediate amplification devices.

In particular, the threaded coupling of the transducer with the support cross member of the sonotrode allows the elimination of the intermediate amplifiers and allows a substantial reduction in the longitudinal dimensions of the transducer/sonotrode assembly that translates into a significant reduction in the overall bulks of the ultrasound welding device, as well as of the machine or apparatus on which it is mounted.

## Claims

1. Ultrasound welding device (10), in particular for welding flexible packages (Y) that are optionally made of a plastic material, said ultrasound welding device (10) comprising:
at least one power generator arranged to generate at least one electric signal, in particular sinusoidal, at a predetermined frequency;
at least one transducer (11) operatively associated with said power generator in order to transform the electric signal generated by said power generator into mechanical vibrations, in particular having the same frequency as said electric signal generated by said power generator;
at least one sonotrode (12) associated with said transducer (11) and structured so as to amplify and transmit the mechanical vibrations generated by the latter to a welding surface (13) defined on said sonotrode (12);
at least one contrast element (16) provided with at least one contrast surface (16a) arranged to engage said welding surface (13) of said sonotrode (12) during at least one welding operation in which at least two elements to be welded, preferably two portions of a flexible package (Y), are interposed between said welding surface (13) of said sonotrode (12) and said contrast surface (16a) of said contrast element (16);
**characterised in that** said transducer (11) and said sonotrode (12) are engaged so as to amplify and transmit the vibrations generated by said transducer (11) to the welding surface (13) of said sonotrode (12) in the absence of the interposition of an amplifier or a similar device for the amplification of vibrations.

2. Ultrasound welding device (10) according to claim 1, wherein said sonotrode (12) and said transducer (11) are engaged to one another through at least one threaded coupling (14).

3. Ultrasound welding device (10) according to claim 1, wherein said sonotrode (12) and said transducer (11) are integrated so as to form a unique entity.

4. Ultrasound welding device (10) according to claim 1 or 2 or 3, wherein said sonotrode (12) comprises:
a first portion (12a) defining said welding surface (13);
a second portion (12b) extending from said first portion (12a) on the opposite side with respect to said welding surface (13), said second portion (12b) of said sonotrode (12) extending canti-levered from said first portion (12a) and having a threaded seat (14a) for screwing said transducer (11).

5. Ultrasound welding device (10) according to claim 4 when claim 3 depends on claim 2, wherein said second portion (12b) of said sonotrode (12) comprises:
at least one pair of amplification arms (12c) developing substantially parallel to one another from said first portion (12a), on the opposite side with respect to said welding surface (13);
at least one support cross member (12d) interposed between said amplification arms (12c) and developing transversely to the latter, preferably substantially perpendicular to the development of said amplification arms (12c), said threaded seat (14a) for screwing said transducer (11) being obtained in said support cross member (12d) of said second portion (12b) of said sonotrode (12).

6. Ultrasound welding device (10) according to claim 5, wherein said amplification arms (12c) and said support cross member (12d) of said second portion (12b) of said sonotrode (12) define a substantially U-shaped structure that delimits, with said first portion (12a) of said sonotrode (12), a housing area (15) for the stay of said transducer (11) screwed in said threaded seat (14a) of said support cross member (12d).

7. Ultrasound welding device (10) according to claim 5 or 6, wherein said threaded seat (14a) is located on said support cross member (12d) of said second portion (12b) of said sonotrode (12) at a middle point of the latter and of said support cross member (12d).

8. Ultrasound welding device (10) according to any claims 5 to 7, wherein the engagement between said transducer (11) and said sonotrode (12) through said threaded coupling (14) is such as to allow the transfer of the longitudinal vibrations generated by said transducer (11) towards said cross member (12d) of said second portion (12b) of said sonotrode (12) on the opposite side with respect to said welding surface (13), said support cross member (12d) and said amplification arms (12c) transferring said mechanical vibrations generated by said transducer (11) towards said first portion (12a) of said sonotrode (12) and, consequently, towards said welding surface (13).

9. Machine (100) for packaging food products and/or similar products comprising:
at least one supply station (101) for supplying a flexible packaging material in the form of a continuous band (Y'), optionally for supplying a flexible plastic material in the form of a continuous band (Y');
at least one transformation station (104) for transforming the flexible packaging material in the form of a continuous band (Y') into a flexible packaging material in the tubular form (Y") operatively arranged downstream of said supply station (101) ;
at least one longitudinal sealing station (106) for sealing the flexible packaging material in the tubular form (Y"), preferably operatively arranged substantially at said transformation station (104), said longitudinal sealing station (106) welding opposite edges (Z) of said flexible packaging material (Y") exiting from said transformation station (104) in order to fix the tubular configuration of said flexible packaging material (Y");
at least one loading station (107) for loading a predetermined amount of at least one food product to be packaged inside said flexible packaging material in the tubular form (Y"), said loading station (107) being arranged at least at said transformation station (104), in particular also at said longitudinal sealing station (106) ;
at least one ultrasound welding station (109) operatively arranged downstream of said longitudinal sealing station (106) in order to make at least one weld on said flexible packaging material in the tubular form (Y"), said weld being transversal to the longitudinal development of the flexible packaging material,
**characterised in that** said ultrasound welding station (109) comprises at least one ultrasound welding device (10) according to any of the previous claims.
